Europäisches Patentamt

European Patent Office

Office européen des brevets

(11) EP 0 629 594 B1

(12) EUROPÄISCHE PATENTSCHRIFT

(45) Veröffentlichungstag und Bekanntmachung des Hinweises auf die Patenterteilung:
21.02.1996 Patentblatt 1996/08

(51) Int. Cl.$^6$: C04B 35/56

(21) Anmeldenummer: 94109275.1

(22) Anmeldetag: 16.06.1994

(54) **Verfahren zur Herstellung von polykristallinen dichten Formkörpern auf der Basis von Borcarbid durch drucklose Sinterung**

Method of making polycrystalline dense shaped bodies based on boron carbide by pressureless sintering

Procédé de fabrication de corps moulés denses et polycristallins à base de carbure de bore par frittage sans pression

(84) Benannte Vertragsstaaten:
CH DE FR GB IT LI SE

(30) Priorität: 17.06.1993 DE 4320102

(43) Veröffentlichungstag der Anmeldung:
21.12.1994 Patentblatt 1994/51

(73) Patentinhaber: Elektroschmelzwerk Kempten GmbH
D-81737 München (DE)

(72) Erfinder:
• Sigl, Lorenz, Dr.
A-6600 Lechaschau (AT)
• Thaler, Hubert
D-87437 Kempten (DE)
• Schwetz, Karl-Alexander, Dr.
D-87477 Sulzberg (DE)

(56) Entgegenhaltungen:
EP-A- 0 494 390          US-E- 23 789

**Beschreibung**

Die Erfindung betrifft ein Verfahren zur Herstellung von polykristallinen dichten Formkörpern auf der Basis von Borcarbid durch drucklose Sinterung.

Borcarbid ist ein Werkstoff, der sich nur durch Zusatz von Sinterhilfsmitteln drucklos verdichten läßt. DE-A 275 19 98 (entspricht US-A 4195066) lehrt, daß sich als Sinterhilfsmittel kohlenstoffhaltige Stoffe in Form von Phenolharzen, die durch Pyrolyse zu amorphem Kohlenstoff umgesetzt werden, aber auch reiner Kohlenstoff in Form von Ruß eignen. Voraussetzung für eine gute Sinterfähigkeit sind 2 bis 6 Gew.-% Kohlenstoff, der möglichst homogen auf der Oberfläche der Borcarbid-Pulverteilchen verteilt ist.

Phenolharze als kohlenstoffhaltige Stoffe bieten besonders gute Voraussetzungen, um diese homogene Verteilung zu erreichen. Bei der Herstellung dichter Körper nach diesem Verfahren wird zunächst eine mit den notwendigen Hilfsstoffen versehener Borcarbid-Schlicker zu Granulat versprüht und dieses durch Gesenkpressen in eine geeignete Form gebracht. Die grünen Formkörper werden anschließend bei ca. 1000°C getempert, wobei die Phenolharze pyrolysiert werden, so daß schließlich jedes Borcarbid-Pulverteilchen von einer dünnen Hülle aus amorphem Kohlenstoff umgeben ist. Neben diesem Verfahren ist auch die direkte Dispergierung von Ruß ein geeignetes Verfahren zur Einbringung von Kohlenstoff als Sinterhilfsmittel, wenn gewährleistet ist, daß die Verteilung der Rußpartikel ausreichend homogen erfolgt.

Beide Sinteradditive sind mit nicht unerheblichen verfahrenstechnischen Problemen verbunden. Phenolharze neigen zum Verkleben im unverkokten Zustand, was die Rieselfähigkeit der Sprühgranulate erheblich beeinträchtigt, so daß das automatische Befüllen von Preßmatrizen problematisch werden kann. Außerdem "altern" mit Phenolharz dotierte Borcarbid-Pulver infolge von Polymerisationsreaktionen, weshalb diese Pulver bei tiefen Temperaturen gelagert werden müssen.

Rußzusätze, die beide Nachteile nicht zeigen, sind dagegen nur schwer dispergierbar, so daß das Sinterhilfsmittel nicht immer in ausreichend homogener Verteilung auf den Borcarbid-Oberflächen vorliegt, was schließlich zu unbefriedigenden Sinterdichten führt, d.h. zu Sinterkörpern mit offener Porosität (<92% TD). Solche Körper können nicht hüllenlos durch heißisostatisches Pressen auf Dichten >99% der theoretischen Dichte (TD) nachverdichtet werden. Für die Tauglichkeit von Borcarbid in zahlreichen Anwendungsfällen sind aber Körper mit $\rho$ > 99% TD Voraussetzung.

Daneben wurde im American Institute of Physics; Conference Proceedings Boron Rich Solids, Nr. 213, S. 464-467 von Zakhariev und Radev ein Verfahren zum drucklosen Sintern von Borcarbid unter Einbeziehung einer flüssigen Phase beschrieben. Dieses Verfahren beruht darauf, daß Borcarbid mit Wolframcarbid vermischt wird und dieses Gemenge unter Bildung von $W_2B_5$ gemäß

$$5B_4C + 8WC \rightarrow 13C + 4W_2B_5 \qquad (1)$$

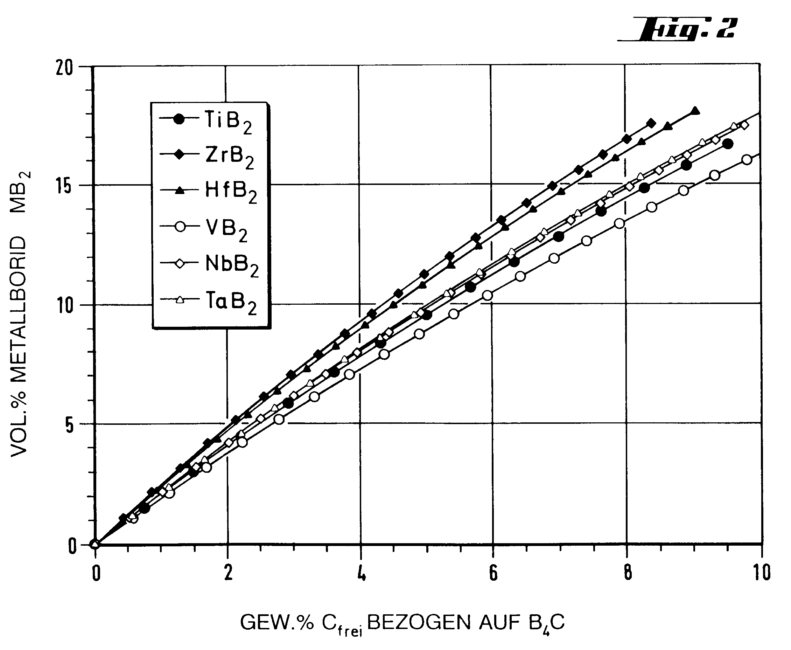

reagiert. Dabei wurde die sinterfördernde Wirkung von $W_2B_5$ ausgenützt. $W_2B_5$ ist ein Sinterhilfsmittel für Borcarbid, weil beide Stoffe ein quasibinäres eutektisches System mit einer eutektischen Temperatur von ca. 2220°C bilden. Die Versuche von Zakhariev und Radev zeigten, daß bei Sintertemperaturen oberhalb der eutektischen Temperatur, d.h. bei Sintertemperaturen ab 2220° Sinterdichten größer 90% TD erreicht werden. Unterhalb von 2220°C, also ohne flüssige Phase, wurden lediglich Dichten kleiner als 82% TD. erzielt (siehe Fig.2 der genannten Literatur). Festphasensintern von Borcarbid unter Ausnutzung der sinterfördernden Wirkung von freiem Kohlenstoff, der durch den Zusatz von Wolframcarbid und eine anschließende Reaktion bei Temperaturen unterhalb der Sintertemperatur gemäß Gl. (1) entsteht, ist somit nach dem beschriebenen Verfahren nicht möglich. Das Verfahren nach Zakhariev und Radev, das durch hohe Sintertemperaturen und das Auftreten flüssiger Phasen gekennzeichnet ist, beschleunigt nachteiligerweise das Kornwachstum von Borcarbid stark. Grobkörnige Gefüge verursachen jedoch wegen der Anisotropie von Borcarbid hohe Eigenspannungen und schließlich Risse, so daß Borcarbid-Körper mit grobem Gefüge für praktische Anwendungen unbrauchbar sind.

Es stellte sich somit die Aufgabe, ein verbessertes Verfahren zur Herstellung von polykristallinen dichten Formkörpern aus Borcarbid, Metalldiborid und Kohlenstoff durch drucklose Sinterung zur Verfügung zu stellen, bei dem die oben genannten Nachteile vermieden werden.

Diese Aufgabe wird erfindungsgemäß dadurch gelöst, daß

a) pulverförmiges Borcarbid mit mindestens einem pulverförmigen Monocarbid der Elemente Ti, Zr, Hf, V, Nb, Ta in einer 2 bis 6 Gew.% freiem Kohlenstoff entsprechenden Menge bezogen auf das Gesamtgewicht des Borcarbids, homogen vermischt wird,
b) diese Mischung zu Grünkörpern einer Dichte von mindestens 50% TD geformt wird,
c) der so erhaltene vorgeformte Körper unter Ausschluß von Sauerstoff im Sinterofen auf ca. 800 bis 1500°C erwärmt und in diesem Temperaturintervall für 10 bis 120 min gehalten wird und
d) der vorgeformte Körper anschließend durch Aufheizen auf 2100 bis 2250°C gesintert wird.

Die Monocarbide der Elemente Ti, Zr, Hf, V, Nb, Ta werden im folgenden als Metallcarbide (MC) bezeichnet.

Da Metallcarbide dem Borcarbid im Vergleich zu Ruß oder Phenolharzen wesentlich ähnlicher sind, verursacht das Einbringen solcher Pulver im Vergleich mit den bisher üblichen Sinterhilfsmitteln nur geringe verfahrenstechnische Probleme. Metallcarbid dotierte Borcarbid-Pulver zeigen keine inhärente Klebeneigung und Metallcarbid-Pulver sind im Gegensatz zu Ruß problemlos mit Borcarbid-Pulvern mischbar.

Vorteilhafterweise ist diese Pulvermischung im Gegensatz zu bekannten Phenolharz dotierten Pulvern ohne besondere Vorkehrung über lange Zeit lagerfähig.

Gemäß der Gleichung

$$B_4C+2MC \rightarrow 3C+2MB_2 \tag{2}$$

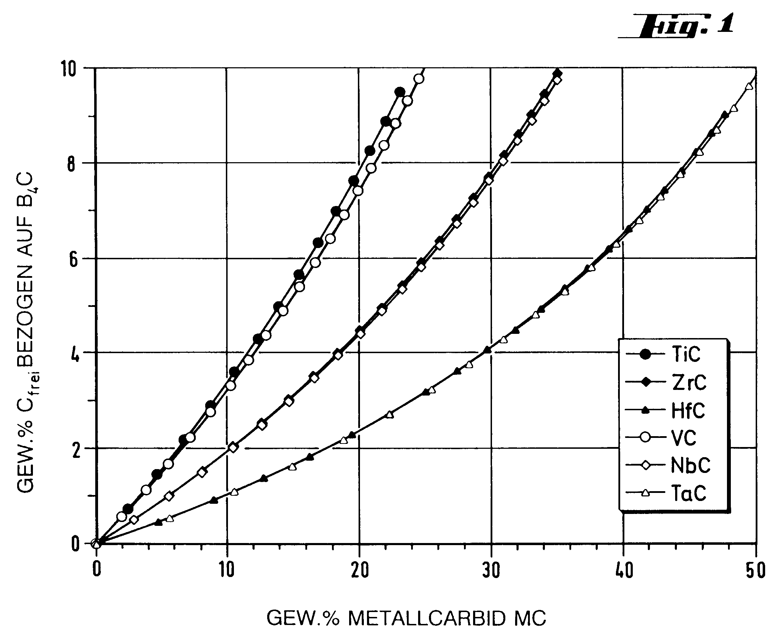

reagiert Borcarbid mit Metallcarbid zu Kohlenstoff, wobei Boride vom Typ $MB_2$ als zusätzliche Phase zurückbleiben. Es ist bekannt, daß für eine ausreichende Sinterfähigkeit von Borcarbid zwischen 2 und 6 Gew.-% freier Kohlenstoff bezogen auf das Gesamtgewicht des Borcarbids notwendig sind. Aus Fig.1 ist ersichtlich, daß bei Verwendung von reinem Borcarbid minimal etwa 6 Gew.% und maximal etwa 38 Gew.% an Metallcarbidpulver in der Ausgangsmischung notwendig sind, um den gewünschten Kohlenstoffgehalt gemäß Gleichung (2) einzustellen.

Wenn das eingesetzte Borcarbidpulver bereits freien Kohlenstoff enthält, was in der Regel der Fall ist, so sind die zuzusetzenden Mengen an Metallcarbid um den dem vorhandenen freien Kohlenstoff entsprechenden Anteil zu vermindern.

Bevorzugt werden die Metallcarbide in Mengen eingesetzt, die zu einem Gehalt von 2,5 bis 5 Gew.% bezogen auf den Borcarbidanteil an freiem Kohlenstoff im Endprodukt führen. Besonders bevorzugt werden die Metallcarbide in Mengen eingesetzt, die zu einem Gehalt von 3 bis 4 Gew.% bezogen auf den Borcarbidanteil an freiem Kohlenstoff im Endprodukt führen. Die jeweils in der Ausgangspulvermischung einzusetzenden Mengen an Metallcarbiden lassen sich aus Fig.1 entnehmen.

Gemäß der Reaktionsgleichung (2) entstehen dann im erfindungsgemäßen Verfahren in Abhängigkeit vom gewünschten Gehalt an freiem Kohlenstoff (bezogen auf den Borcarbid-Gehalt) die in Fig. 2 dargestellten Mengen an $MB_2$. Aus Fig. 2 ist ersichtlich, daß infolge der für die Sinterfähigkeit von Borcarbid notwendigen Kohlenstoff-Gehalte (2 bis 6 Gew.-%) zwischen 4 und 13 Vol% $MB_2$ entstehen.

Ein wesentlicher Vorteil des erfindungsgemäßen Verfahrens gegenüber bekannten Verfahren ist, daß die Verfahrensschritte c) und d) im selben Sinterzyklus ablaufen. Ein weiterer Vorteil des Verfahrens ist, daß das während des Verfahrensschritts c) entstehende $MB_2$ kornwachstumshemmend auf die Borcarbid-Matrix wirkt. Da übermäßiges Kornwachstum die Verdichtung hemmt, wirkt dadurch auch der in Verfahrensschritt c) gebildete $MB_2$-Anteil sinterfördernd in Schritt d).

Für die Durchführung des erfindungsgemäßen Verfahrens wird als Ausgangsmaterial vorteilhaft ein Borcarbidpulver mit einer Reinheit von mindestens 98,5 Gewichtsprozent verwendet, worunter zu verstehen ist, daß die Analysensumme von Bor und Kohlenstoff mindestens 98,5 Gewichtsprozent beträgt, bei einem B : C-Atomverhältnis im Bereich von 3,5 bis 4,5 : 1. Metallische Verunreinigungen können insgesamt bis zu 0,5 Gewichtsprozent toleriert werden. Der noch verbleibende Differenzbetrag bis zu 100 Gewichtsprozent verteilt sich auf Sauerstoff und Stickstoff in Form von anhaftendem Boroxid und Bornitrid, wobei die Analysensumme von Sauerstoff + Stickstoff < 1 Gewichtsprozent ist. Als Maß für die erforderliche Korngröße wird zweckmäßig die spezifische Oberfläche herangezogen (gemessen nach der BET-Methode).

Borcarbidpulver mit einer spezifischen Oberfläche im Bereich von 5 bis 50 m²/g haben sich als besonders gut sinterfähig bewährt.

Das verwendete Borcarbidpulver kann amorph oder kristallin sein, es kann direkt durch Abscheidung aus der Gasphase, beispielsweise aus Borhalogeniden oder Boranen und gasförmigen Kohlenwasserstoffen gewonnen werden. Aus wirtschaftlichen Gründen ist es indessen vorteilhaft, von grobkörnigen, kristallinem Borcarbid auszugehen, das großtechnisch beispielsweise nach dem Schmelzreduktionsverfahren von Borsäure durch Kohlenstoff im elektrischen Ofen hergestellt worden ist. Dieses wird zunächst einer Intensivmahlung auf Korngrößen von etwa 3 µm und feiner unterzogen und daraus anschließend nach üblichen bekannten Verfahren, wie Windsichten oder Schlämmen das Pulver mit der gewünschten spezifischen Oberfläche abgetrennt.

Die Metallcarbide werden vorteilhafterweise in handelsüblicher Form mit Korngrößen nach FSS < 10 µm, bevorzugt < 5 µm, besonders bevorzugt < 2.5 µm eingesetzt. Die Metallcarbide können einzeln oder in beliebiger Mischung im erfindungsgemäßen Verfahren eingesetzt werden.

Zur Durchführung des erfindungsgemäßen Verfahrens kann wie folgt vorgegangen werden:
Zunächst wird das Borcarbidpulver mit dem oder den genannten Metallcarbiden durch Mischen in einer Suspension oder ggf. durch Mischmahlung homogen vermischt.

Das Mischen des Borcarbidpulvers mit dem Metallcarbid wird vorteilhaft dadurch erreicht, daß das Metallcarbid und das Borcarbidpulver in einer Lösung dispergiert werden. Falls erwünscht, können auch temporäre Bindemittel und/oder Gleitmittel zugesetzt werden. Als Lösungsmittel können beispielsweise Aceton und niedere aliphatische Alkohole mit 1 bis 6 Kohlenstoffatomen Verwendung finden. Bevorzugt wird als Lösungsmittel Wasser verwendet. Als temporäre Bindemittel und/oder Gleitmittel sind alle für diese Zwecke üblichen Mittel geeignet. Beispiele für solche temporären Bindemittel sind Polyvinylalkohol, Polystyrol oder Paraffin; für die Gleitmittel Stearinsäure, Metallstearate oder Polyethylenglykol. Bei Einsatz dieser sog. Presshilfsmittel werden vorzugsweise Mengen bis zu insgesamt maximal 2 Gew.% bezogen auf die resultierende Mischung verwendet. Das Dispergieren kann durch mechanische Bewegung einer dünnflüssigen Suspension in Plastikbehältern unter Verwendung eines mit Polytetrafluoräthylen beschichteten Magnetrührers oder durch Kneten einer dickflüssigen Suspension in einer Knetvorrichtung vorgenommen werden. Nach dem Entfernen des Lösungsmittels, was beispielsweise bei einer dünnflüssigen Suspension durch Sprüh- oder Gefriertrocknung oder bei einer dickflüssigen Suspension durch Abdunsten während des Knetvorgangs erfolgen kann, wird das erhaltene homogene Pulver zu dem gewünschten Körper mit einer Dichte von mindestens 50% TD geformt.

Das homogene Pulver wird durch übliche bekannte keramische Formgebungsverfahren wie z.B. Trockenpressen, Kaltisostatpressen, Spritzgießen Strangpressen oder Schlickergießen unter Bildung von Grünkörpern in eine geeignete Form gebracht. Beim Trockenpressen wird üblicherweise ein Druck zwischen 300 und 6000 bar vorzugsweise 1000 bis 3000 bar angewendet.

Wenn in der Ausgangspulvermischung Preß- und Bindemittel vorhanden waren können diese, falls gewünscht, vor dem Sintern durch eine separate Glühbehandlung z.B. bei Temperaturen von ca. 400°C wieder entfernt werden.

Anschließend werden die vorgeformten Körper unter Ausschluß von Sauerstoff in einem Vakuumofen bevorzugt mit einem Heizleiter aus Kohlenstoff, auf Temperaturen im Bereich zwischen 800 und 1500°C, vorzugsweise zwischen 1250 und 1400°C, erhitzt und bei dieser Temperatur 10 bis 120 min., vorzugsweise 15 bis 60 min. gehalten. Dabei reagiert Metallcarbid mit einem Teil des Borcarbids zu freiem Kohlenstoff und Metalldiborid. Schließlich werden die Körper bevorzugt im selben Ofen unter Ausschluß von Sauerstoff weiter auf Temperaturen im Bereich zwischen 2100 und 2250°C, vorzugsweise zwischen 2125 und 2200°C, besonders bevorzugt zwischen 2140 und 2170°C erhitzt und bei dieser Temperatur 10 bis 600 min., vorzugsweise 30 bis 300 min., besonders bevorzugt 60 bis 120 min. gehalten und schließlich langsam auf Raumtemperatur abgekühlt.

Die genannten Verfahrensschritte wurden vorteilhafterweise in einem Sinterzyklus durchgeführt. Es ist jedoch natürlich ebenso möglich, die einzelnen Verfahrensschritte jeweils getrennt durchzuführen.

Die nach dem erfindungsgemäßen Verfahren hergestellten Werkstoffe bestehen neben Borcarbid zu 2 bis 6 Gew.-% bezogen auf das Borcarbid aus Kohlenstoff, zu 3 bis 14 Vol.-% aus Metalldiborid.

Die Werkstoffe besitzen folgende Eigenschaften:
Dichte mindestens 92% der theoretisch möglichen Dichte des Verbundwerkstoffs, Härte HK 0.1 größer 2500, Biegebruchfestigkeit (gemessen nach der Vierpunktmethode bei Raumtemperatur) mindestens 300 MPa.

Nachdem durch Sintern der Zustand geschlossener Porosität ($\rho > 92\%$ TD) erreicht wurde, können die Sinterkörper, wenn höhere Dichten erforderlich sind, heißisostatisch nachverdichtet werden. Dies erfolgt zweckmäßigerweise vor dem Abkühlen auf Raumtemperatur, durch Anwendung von Druck mittels eines gasförmigen Druckübertragungsmediums, wie etwa Argon, bei Temperaturen zwischen 1900 und 2150°C unter einem Druck von 5 bis 200 MPa für eine Dauer von 5 bis 60 min.

Durch diese hüllenlose heißisostatische Nachverdichtung wird der Großteil der noch vorhandenen Poren eliminiert, so daß der fertige Werkstoff dann eine Dichte > 98% TD aufweist.

Die hervorragenden Eigenschaften der nach dem erfindungsgemäßen Verfahren drucklos gesinterten Formkörper ermöglichen ihre Verwendung auf dem Gebiet der Verschleißtechnik z. B. als Sandstrahldüsen oder Wasserstrahldüsen.

Die erfindungsgemäßen Formkörper eignen sich insbesondere auch zur Verwendung als Schneidwerkstoff bevorzugt für Nichteisenmetalle. Sie sind insbesondere geeignet zur Bearbeitung von Al-Si Gußlegierungen.

Fig. 1 zeigt den Zusammenhang zwischen den Gew.-% der in den Ausgangspulvermischungen eingesetzten Metallcarbide und den Gew.-% an freiem Kohlenstoff in den gesinterten Formkörpern.

Fig. 2 zeigt den Zusammenhang zwischen dem im gesinterten Formkörper gebildeten freien Kohlenstoff und dem Volumenanteil der gebildeten Metalldiboride.

Die folgenden Beispiele dienen zur weiteren Erläuterung der Erfindung. Die in den Beispielen verwendeten Pulver sind in Tab.1 spezifiziert.

Tab.1

| Korngröße und Zusammensetzung der in den Beispielen verwendeten $B_4C$- und MC-Pulver | | | | |
|---|---|---|---|---|
| Pulver | FSSS [µm] | BET [m²/g] | $C_{frei}$ [Gew.%] | Hersteller |
| $B_4C$ | - | 15,5 | 0,6 | ESK, Kempten |
| TiC | 1,5 | 0,81 | 0,2 | H.C. Starck, Goslar |
| VC | 1,8 | 0,62 | 0,3 | H.C. Starck, Goslar |
| HfC | 2,8 | 0,17 | 0,3 | H.C. Starck, Goslar |
| TaC | 1,7 | 0,25 | 0,3 | H.C. Starck, Goslar |
| NbC | 1,9 | 0,42 | 0,3 | H.C. Starck, Goslar |
| ZrC | 3,2 | 0,28 | 0,4 | H.C. Starck, Goslar |
| FSSS = Fisher Sub Sieve Sizer | | | | |

Beispiel 1

762,4 g $B_4C$ mit einer spezifischen Oberfläche von 15.5 m²/g (Tabelle 1) und 37,6 g TiC (Tabelle 1) wurden in 1,2 dm³ n-Heptan, worin zuvor 16 g Paraffin gelöst worden war, in einer Planetenkugelmühle 30 min. lang bei 120 U/min. vermahlen. Das Pulvergemisch wurde im Rotationsverdampfer getrocknet und anschließend in einer Rotormühle entagglomeriert. Dieses Pulver wurde bei einem Druck von 200 MPa kaltisostatisch zu Quadern der Größe 60x20x20 mm³ verpreßt. Die Grünkörper wurden in einem Vakuumofen unter 10 mbar Argon mit einer Aufheizrate von 15°C/min auf 1200°C aufgeheizt. Das Temperaturintervall von 1200 bis 1500°C, in dem die Reaktion von $B_4C$ mit TiC zu freiem Kohlenstoff und $TiB_2$ stattfindet, wurde mit einer Aufheizrate von 2,5°C/min. durchfahren. Anschließend wurden die Körper mit einer Aufheizrate von 10°C/min auf die Sintertemperatur von 2150°C erwärmt und bei dieser Temperatur für 120 min. gehalten und schließlich abgekühlt.

Die Probekörper wiesen nach dem Sintern eine Dichte von 2,47g/cm³ und eine geschlossene Porosität auf. Durch heißisostatische Nachverdichtung bei einer Temperatur von 2100°C unter einem Argon-Druck von 200 MPa wurde eine Dichte von 2,56 g/cm³ erzielt, was der theoretischen Dichte entspricht.

Durch die Reaktion von $B_4C$ mit TiC entstanden in diesem Körper 3,1 Vol.-% $TiB_2$ und 2,2 Gew.-% freier Kohlenstoff bezogen auf den $B_4C$-Anteil nach der Reaktion. Röntgenographisch wurde der freie Kohlenstoff als 2H-Modifikation von Grafit identifiziert.

Beispiel 2

728,8 g $B_4C$-Pulver mit einer spezifischen Oberfläche von 15,5 m²/g (Tabelle 1) und 71,2 g TiC-Pulver (Tabelle 1) wurden wie in Beispiel (1) beschrieben gemahlen, getrocknet, gepreßt und anschließend gesintert bzw. heißisostatisch gepreßt. Die Dichte nach dem Sintern lag bei 2,55 g/cm³ und nach dem Heißisostatpressen bei 2,63 g/cm³. Durch die Reaktion von $B_4C$ mit TiC entstanden in diesem Körper 6,1 Vol.-% $TiB_2$ und 3,7 Gew.-% freier Kohlenstoff bezogen auf den $B_4C$-Anteil nach der Reaktion.

Beispiel 3

698,4 g $B_4C$-Pulver mit einer spezifischen Oberfläche von 15,5 m²/g (Tabelle 1) und 101,6 g TiC-Pulver (Tabelle 1) wurden wie in Beispiel 1 beschrieben gemahlen, getrocknet, gepreßt und anschließend gesintert bzw. heißisostatisch gepreßt. Die Dichte nach dem Sintern lag bei 2,61 g/cm³ nach dem Heißisostatpressen bei 2,68 g/cm³. Durch die Reaktion von $B_4C$ mit TiC entstanden in diesem Körper 8,3 Vol.-% $TiB_2$ und 6,0 Gew.-% freier Kohlenstoff bezogen auf den $B_4C$-Anteil nach der Reaktion.

Beispiel 4

727,2 g $B_4$C-Pulver mit einer spezifischen Oberfläche von 15,5 m²/g (Tabelle 1) und 72,8 g VC-Pulver (Tabelle 1) wurden, wie in Beispiel (1) beschrieben, gemahlen, getrocknet, gepreßt und anschließend gesintert bzw. heißisostatisch gepreßt. Die Dichte nach dem Sintern lag bei 2,54 g/cm³ und nach dem Heißisostatpressen bei 2,65 g/cm³. Durch die Reaktion von $B_4$C mit VC entstanden in diesem Körper 5,3 Vol.-% $VB_2$ und 3,6 Gew.-% freier Kohlenstoff bezogen auf den $B_4$C-Anteil nach der Reaktion.

Beispiel 5

572 g $B_4$C-Pulver mit einer spezifischen Oberfläche von 15.5 m²/g (Tabelle 1) und 228 g HfC-Pulver (Tabelle 1) wurden, wie in Beispiel (1) beschrieben gemahlen, getrocknet, gepreßt und anschließend gesintert bzw. heißisostatisch gepreßt. Die Dichte nach dem Sintern lag bei 3,17 g/cm³ und nach dem Heißisostatpressen bei 3,26 g/cm³. Durch die Reaktion von $B_4$C mit HfC entstanden in diesem Körper 8,7 Vol.-% $HfB_2$ und 4,8 Gew.-% freier Kohlenstoff bezogen auf den $B_4$C-Anteil nach der Reaktion.

Beispiel 6

568,8 g $B_4$C-Pulver mit einer spezifischen Oberfläche von 15,5 m²/g (Tabelle 1) und 231,2 g TaC-Pulver (Tabelle 1) wurden wie in Beispiel (1) beschrieben gemahlen, getrocknet, gepreßt und anschließend gesintert bzw. heißisostatisch gepreßt. Die Dichte nach dem Sintern lag bei 3,18 g/cm³ und nach dem Heißisostatpressen bei 3,31 g/cm³. Durch die Reaktion von $B_4$C mit TaC entstanden in diesem Körper 8,0 Vol.-% $TaB_2$ und 3,9 Gew.-% freier Kohlenstoff bezogen auf den $B_4$C-Anteil nach der Reaktion.

Beispiel 7

688 g $B_4$C-Pulver mit einer spezifischen Oberfläche von 15,5 m²/g (Tabelle 1) und 112 g NbC-Pulver (Tabelle 1) wurden, wie in Beispiel (1) beschrieben, gemahlen, getrocknet, gepreßt und anschließend gesintert bzw. heißisostatisch gepreßt. Die Dichte nach dem Sintern lag bei 2,66 g/cm³ und nach dem Heißisostatpressen bei 2,77 g/cm³. Durch die Reaktion von $B_4$C mit NbC entstanden in diesem Körper 6,1 Vol.-% $NbB_2$ und 3,4 Gew.-% freier Kohlenstoff bezogen auf den $B_4$C-Anteil nach der Reaktion.

Beispiel 8

680,8 g $B_4$C-Pulver mit einer spezifischen Oberfläche von 15,5 m²/g (Tabelle 1) und 119,2 g ZrC-Pulver (Tabelle 1) wurden wie in Beispiel (1) beschrieben gemahlen, getrocknet, gepreßt und anschließend gesintert bzw. heißisostatisch gepreßt. Die Dichte nach dem Sintern lag bei 2,71 g/cm³ und nach dem Heißisostatpressen bei 2,77 g/cm³. Durch die Reaktion von $B_4$C mit ZrC entstanden in diesem Körper 7,4 Vol.-% $ZrB_2$ und 3,7 Gew.-% freier Kohlenstoff bezogen auf den $B_4$C-Anteil nach der Reaktion.

**Patentansprüche**

1.  Verfahren zur Herstellung von Formkörpern aus Borcarbid, Metalldiborid und Kohlenstoff, dadurch gekennzeichnet, daß

    a) pulverförmiges Borcarbid mit mindestens einem pulverförmigen Monocarbid der Elemente Ti, Zr, Hf, V, Nb, Ta in einer 2 bis 6 Gew.% freiem Kohlenstoff entsprechenden Menge bezogen auf das Gesamtgewicht des Borcarbids, homogen vermischt wird,
    b) diese Mischung zu Grünkörpern einer Dichte von mindestens 50% TD geformt wird,
    c) der so erhaltene vorgeformte Körper unter Ausschluß von Sauerstoff im Sinterofen auf ca. 800 bis 1500°C erwärmt und in diesem Temperaturintervall für 10 bis 120 min gehalten wird und
    d) der vorgeformte Körper anschließend durch Aufheizen auf 2100 bis 2250°C drucklos gesintert wird.

2.  Verfahren nach Anspruch 1, dadurch gekennzeichnet, daß das pulverförmige Borcarbid mit einer spezifischen Oberfläche von 5 bis 50 m²/g eingesetzt wird.

3.  Verfahren nach Anspruch 1 oder 2, dadurch gekennzeichnet, daß das pulverförmige Monocarbid der Elemente Ti, Zr, Hf, V, Nb, Ta, mit einer Korngröße kleiner 5 µm eingesetzt wird.

4. Verfahren nach einem oder mehreren der Ansprüche 1 bis 3, dadurch gekennzeichnet, daß im Anschluß an Verfahrensschritt d) der Formkörper heißisostatisch nachverdichtet wird.

**Claims**

1. Process for producing shaped bodies of boron carbide, metal diboride and carbon, characterized in that

   a) pulverulent boron carbide is homogeneously mixed with at least one pulverulent monocarbide of the elements Ti, Zr, Hf, V, Nb, Ta in an amount corresponding to from 2 to 6 % by weight of free carbon, based on the total weight of the boron carbide,
   b) this mixture is shaped into green bodies of a density of at least 50 % TD,
   c) the preformed body thus obtained is heated to from about 800 to 1500°C with exclusion of oxygen in a sintering furnace and maintained within this temperature range for from 10 to 120 minutes and
   d) the preformed body is subsequently sintered without pressure by heating to from 2100 to 2250°C.

2. Process according to Claim 1, characterized in that the pulverulent boron carbide used has a specific surface area of from 5 to 50 m$^2$/g.

3. Process according to Claim 1 or 2, characterized in that the pulverulent monocarbide of the elements Ti, Zr, Hf, V, Nb, Ta used has a particle size of less than 5 μm.

4. Process according to one or more of Claims 1 to 3, characterized in that the shaped body is further densified by hot isostatic pressing subsequent to process step d).

**Revendications**

1. Procédé de production de corps moulés de carbure de bore, de diborure de métal et de carbone, caractérisé en ce que

   a) du carbure de bore pulvérulent est mélangé de façon homogène avec au moins un monocarbure pulvérulent des éléments Ti, Zr, Hf, V, Nb, Ta, en une quantité correspondant à 2 à 6% en poids de carbone libre, par rapport au poids total du carbure de bore,
   b) ce mélange est moulé en corps verts d'une densité au moins égale à 50% de la DT,
   c) le corps préformé ainsi obtenu est chauffé à une température d'environ 800 à 1 500°C, sans oxygène, dans un four de frittage, et maintenu dans cette gamme de températures pendant 10 à 120 minutes, et
   d) le corps préformé est ensuite fritté sans pression par chauffage à une température de 2 100 à 2 250°C.

2. Procédé selon la revendication 1, caractérisé en ce que le carbure de bore pulvérulent utilisé possède une surface spécifique de 5 à 50 m$^2$/g.

3. Procédé selon la revendication 1 ou 2, caractérisé en ce que le monocarbure pulvérulent des éléments Ti, Zr, Hf, V, Nb, Ta utilisé possède une granulométrie inférieure à 5 μm.

4. Procédé selon l'une quelconque des revendications 1 à 3, caractérisé en ce que le corps moulé est densifié davantage par pressage isostatique à chaud après l'étape opératoire d).

Fig. 1

EP 0 629 594 B1

Fig. 2